(19) Europäisches Patentamt
European Patent Office
Office européen des brevets

(11) Publication number: **0 051 930**
**B1**

(12) **EUROPEAN PATENT SPECIFICATION**

(45) Date of publication of patent specification: **24.04.85**

(51) Int. Cl.$^4$: **C 09 D 5/16**

(21) Application number: **81304851.9**

(22) Date of filing: **19.10.81**

# (54) Marine paint.

(30) Priority: **30.10.80 GB 8034978**

(43) Date of publication of application:
**19.05.82 Bulletin 82/20**

(45) Publication of the grant of the patent:
**24.04.85 Bulletin 85/17**

(84) Designated Contracting States:
**DE FR GB IT NL SE**

(56) References cited:
**AU-A- 466 764**
**GB-A-1 457 590**

**CHEMICAL ABSTRACTS, vol.84, no.24, June 14, 1976, page 90, abstract no.16345a, Columbus, Ohio (US)**

(73) Proprietor: **INTERNATIONAL PAINT public limited company**
**Henrietta House 9 Henrietta Place**
**London W1A 1AD (GB)**

(72) Inventor: **Sghibartz, Cristian Marius**
**18, Sunningdale Drive**
**Washington Tyne and Wear, NE37 2LL (GB)**

(74) Representative: **Hale, Stephen Geoffrey et al**
**J.Y. & G.W. Johnson Furnival House 14/18 High Holborn**
**London WC1V 6DE (GB)**

**EP 0 051 930 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to marine anti-fouling paints generally used as top-coat paints for ships' hulls.

The growth of marine organisms on the sub-marine parts of a ship's hull increases the frictional resistance of the hull to passage through water, leading to increased fuel consumption and/or a reduction in the speed of the ship. Marine growths accumulate so rapidly that the remedy of cleaning and repainting as required is impractical. In general the extent of fouling is limited by applying to the hull a top-coat incorporating anti-fouling agents. The anti-fouling agents are biocides which are freed from the surface of the paint over a period in concentrations lethal to marine organisms on the hull's surface. The anti-fouling paint fails only when the concentration of biocide available at the paint surface falls below the lethal concentrations, and with marine paints up to two years' useful life can be expected. The better anti-fouling paints are thus effective in dealing with gross infestation of hulls for considerable periods but a top coat paint of a ship's sub-marine surface has irregularities from its method of application and is furthermore subject to break-down and delamination during service, increasing the roughness of the hull, so that the performance of the ship falls off even when fouling is prevented.

Our British Patent Specification 1,457,590 describes and claims a paint based on a film-forming copolymer containing units of a triorganotin salt of an olefinically unsaturated carboxylic acid. Upon contact with seawater it loses triorganotin ions by ion exchange with seawater. This generates a water-soluble resin which essentially is a copolymer salt formed as a result of the depletion in the copolymer organotin content and exchange with metal ions present in seawater. This gradual dissolution of the copolymer means that a fresh anti-fouling paint surface is continuously revealed, prolonging the time for which biocide release at the paint surface is maintained above the lethal concentration.

The paint of British Patent Specification 1,457,590 has the remarkable property that relatively moving seawater smooths the surface of the paint, removing excrescences composed of the paint. When it is painted on a ship, the painted sub-marine surface of the ship at least preserves its initial smoothness and may become smoother during the ordinary traffic of the ship, leading to improved efficiency. The smoothing of the paint is inevitably accompanied by the release of the triorganotin ions into the surrounding seawater. In most circumstances, this is useful because the triorganotin ions are effective anti-fouling agents. However, triorganotin compounds are both expensive and strongly biocidal and it would be desirable in many circumstances to reduce the usage of triorganotin groups while obtaining the benefits of the smoothing of the paint in service.

We have now found surprisingly that certain polymers of more simple acrylate esters can be used as the basis of marine paints which are gradually planed away as a ship moves through seawater.

A marine paint according to the present invention comprises a film-forming acrylic polymer and a metalliferous pigment which is sparingly soluble in seawater. The acrylic polymer comprises 20 to 70 per cent by weight of monomer units (A) selected from methyl acrylate and ethyl acrylate units, 10 to 45 per cent by weight of monomer units (B) of a triorganotin salt of an olefinically unsaturated carboxylic acid, and 20 to 50 per cent by weight of units (C) which are alkyl methacrylate units having 1 to 4 carbons in the alkyl group or styrene units, provided that if the acrylic polymer is prepared by emulsion polymerisation it contains no more than 40 per cent by weight of monomer units (C), monomer units (A) and (B) and (C) forming at least 80 per cent by weight of the polymer and the balance of the polymer, if any, being units of at least one other olefinically unsaturated comonomer.

The film-forming polymers used in the present invention are slowly hydrolysed in seawater so that they are gradually removed by motion through seawater. No inactive layer develops at the surface of the paint, and the paint at least maintains its initial smoothness in the manner shown in Figures 2C and 2D of British Patent Specification 1,457,590.

The $C_{1-4}$ alkyl methacrylate units are preferred monomer units (C), particularly methyl methacrylate units. The olefinically unsaturated comonomer, if used, can be an acrylic monomer, for example propyl acrylate, amyl acrylate, hexyl acrylate, butyl acrylate, hexyl methacrylate, acrylonitrile or methacrylonitrile, or a vinyl monomer, for example vinyl acetate, vinyl propionate, vinyl butyrate, vinyl chloride or vinyl pyridine. The polymer can contain monomer units conferring increased water reactivity, particularly when the polymer contains a relatively high proportion of monomer units (C), which tend to inhibit dissolution of the polymer. For example the polymer can contain up to 20 per cent by weight of maleic or itaconic anhydride, acrylamide, methacrylamide or N-vinyl pyrrolidone units or up to 5 per cent by weight, preferably 2 per cent or less, of acrylic, methacrylic or itaconic acid units. Care must be taken to avoid gelation of the paint when using a copolymer containing free acid monomer units.

The paint of the invention releases biocidal triorganotin ions by hydrolysis from the polymer and is smoothed by passage through seawater, but is more economical in the use of triorganotin than, for example, paints according to British Patent Specification 1,457,590. The monomer units (B) are preferably of the formula

$$R_3SnOOCCR'=CHR''$$

where each R is an alkyl radical containing 2 to 8 carbon atoms or an aryl or aralkyl radical, R' is H or $CH_3$ and R'' is H or $-COOSnR_3$. The groups R attached to the tin atom can be different but are preferably the

same, for example $R_3Sn$ can be tributyl tin, tripropyl tin, tribenzyl tin, triphenyl tin, tritolyl tin or trihexyl tin. The carboxylate group —OOCCR'=CHR" is preferably acrylate, methacrylate or maleate.

The film-forming polymer can be prepared by addition polymerisation of the appropriate monomers in the appropriate proportions at polymerisation conditions using a free radical catalyst such as benzoyl peroxide or azobisisobutyronitrile in an organic solvent such as xylene, toluene, butyl acetate, n-butanol, 2-ethoxyethanol, cyclohexanone, 2-methoxyethanol, 2-butoxyethanol and/or 2-ethoxyethyl acetate. Polymerisation is preferably at a temperature in the range 70—100°C. Within this range the use of higher temperatures produces polymers of lower molecular weight. Polymerisation may be carried out by heating all the polymer ingredients in the solvent at the required temperature or by gradually adding a mixture of the monomers and catalyst to treated solvent. The latter procedure produces polymers of lower molecular weight. A chain transfer agent such as a mercaptan can also be used to produce polymers of lower molecular weight. For a given proportion of monomers the paint tends to dissolve in and become smoothed by relatively moving seawater more rapidly if the polymer has a lower molecular weight, and such polymers may be preferred when using a high proportion of monomer units (C), particularly if monomer units (C) comprise styrene. Mixtures of polymers of different composition, or of higher and lower molecular weight polymers, can be used.

Alternatively the paint can be an aqueous emulsion paint based on a film-forming acrylic polymer prepared by emulsion polymerisation. In this case the monomers are preferably chosen so that the polymer has a glass transition temperature of 5—25°C. Emulsion copolymers include no more than 40 per cent by weight of monomer units (C).

The metalliferous pigment sparingly soluble in seawater is exemplified by cuprous thiocyanate, cuprous oxide, zinc oxide, cupric acetate meta-arsenate, zinc chromate, zinc dimethyl dithiocarbamate and zinc diethyl dithiocarbamate. The paint preferably includes at least one metalliferous pigment selected from zinc oxide, cuprous oxide and cuprous thiocyanate and pigments whose seawater solubility is similar to theirs. These pigments have a seawater solubility such that the pigment particles do not survive at the paint surface. The pigment has the effect of inducing the overall smoothing which the relatively-moving seawater exerts on the paint film, minimising localised erosion and preferentially removing excrescences formed during the application of the paint. Mixtures of sparingly soluble pigments can be used, for example zinc oxide which is most effective at inducing the gradual dissolution of the paint, can be mixed with cuprous oxide, cuprous thiocyanate or zinc dimethyl dithiocarbamate which are more effective marine biocides.

Such mixtures preferably comprise up to 75 per cent by volume zinc oxide and 25—100 per cent by volume cuprous oxide or cuprous thiocyanate. Zinc dimethyl dithiocarbamate and zinc diethyl dithiocarbamate are somewhat less soluble than cuprous oxide or thiocyanate. If used, they preferably form up to 75 per cent by volume of the pigment, with at least 25 per cent by volume of the pigment being zinc oxide.

The paint composition can additionally contain a pigment which is highly insoluble in seawater, such as titanium dioxide or ferric oxide. Such highly insoluble pigments can be used at up to 40 per cent by weight of the total pigment component of the paint. The highly insoluble pigment has the effect of retarding the dissolution of the paint.

The proportion of pigment to polymer is generally such as to give a pigment volume concentration of at least 25 per cent, preferably at least 35 per cent, in the dry paint film. The upper limit of pigment concentration is the critical pigment volume concentration. Paints of pigment volume concentration about 50 per cent, for example, have been found very effective for smoothing in seawater and preventing fouling.

Paints according to the invention may include a plasticiser although this is not usually necessary. Examples of plasticisers are tritolyl phosphate, diisooctyl phthalate, tributyl phosphate, butyl benzyl phthalate, dibutyl tartrate, 'Lutonal A25' polyether and hydrophobic organic plasticisers which retard the rate of dissolution of the paint, such as chlorinated diphenyl, for example Aroclor 1254 sold by Monsanto Ltd., chlorinated paraffin wax, for example Cereclor 48 and Cereclor 70 sold by I.C.I. Ltd., diphenyl ether, dichlorodiphenyl-trichloroethane or low-molecular weight polybutenes such as Hyvis 05 sold by B.P. Ltd., (Lutonal, Aroclor, Cereclor and Hyvis are Registered Trade Marks).

Many of the metalliferous pigments sparingly soluble in seawater have biocidal activity, particularly copper compounds such as cuprous thiocyanate, cupric acetate meta-arsenate and cuprous oxide, and also zinc oxide to a lesser extent. We believe that the self-smoothing action of the paint increases its resistance to fouling compared to a conventional paint releasing biocide at the same rate; this effect is more marked with increasing rate of dissolution of the paint, as for example when the film-forming polymer contains a high proportion of methyl or ethyl acrylate and the sparingly soluble pigment includes zinc oxide.

The paint is generally an effective antifouling paint without an added biocide but it can contain an added biocide effective against seaweed and barnacles. Examples of other biocides effective as antifouling agents are di-thiocarbamate derivatives such as cuprous ethylene bis-di-thiocarbamate or 2-(N,N-dimethyl thiocarbamyl thio)-5-nitro thiazole, substituted isothiazolones particularly halogenated N-substituted isothiazolones, tetramethyl thiuram disulphide, dichloro - diphenyl - trichloroethane (which also acts as a hydrophobic organic retarder), as well as triorganotin salts and oxide such as triphenyltin fluoride, tributyl tin fluoride, tributyl tin dibromosuccinate, triphenyltin chloride, triphenyltin hydroxide and tributyltin oxide.

The invention is illustrated by the following Examples:—

Example 1

Methyl methacrylate (78 g), methyl acrylate (39 g) and tributyltin methacrylate (78 g) were dissolved in xylene (222 g). Azobis-iso-butyro-nitrile (=AIBN) (5 g) was added and the solution was heated to 80°C. The polymerisation reaction was conducted (with stirring) at this temperature. There was a mild exotherm in the first 20 minutes of the reaction. The course of the polymerisation was followed by monitoring the change in the refractive index. No further significant change was observed after 4 hours and the solution was then heated to 100°C for a period of 30 minutes to destroy any residual activity of AIBN. The product was a 39.2 per cent by volume solids solution of a 40:20:40 by weight copolymer of methyl methacrylate:methyl acrylate:tributyltin methacrylate. 163 g of this copolymer solution was mixed with 66 g zinc oxide, 69.5 g cuprous oxide, 2 g Aerosil colloidal silica, 3.5 g bentonite, 1.3 g n-butanol and 7 g xylene to produce a paint of P.V.C. 35 per cent (Aerosil is a Registered Trade Mark).

Example 2

226 g xylene was heated to 90°C. 74 g methyl methacrylate was mixed with 37 g methyl acrylate, 148 g of a 50 per cent by weight solution of tributyltin methacrylate in xylene and 15 g AIBN and the mixture was added to the hot xylene over 1 hour to produce a 36.7 per cent by volume solution of a copolymer having the same weight ratio of monomers as that of Example 1 but a lower molecular weight. 170.5 g of this copolymer solution was mixed with 66 g zinc oxide, 69.5 g cuprous oxide, 2 g Aerosil colloidal silica, 3.5 g bentonite, and 1.5 g n-butanol to produce a paint of P.V.C. 36.5 per cent.

Examples 3—4

Using the procedure of Example 1 copolymer solutions were produced from the following monomers:

| Example No. | Methyl methacrylate | Methyl acrylate | Tributyltin methacrylate |
|---|---|---|---|
| 3 | 78 g (40 wt%) | 78 g (40 wt%) | 39 g (20 wt%) |
| 4 | 78 g (40 wt%) | 97.5 g (50 wt%) | 19.5 g (10 wt%) |

Paints of P.V.C. 35 per cent were prepared from each of these copolymer solutions using the same pigment and other ingredients as in Example 1.

Example 5

68 g methyl methacrylate, 34 g methyl acrylate and 68 g tributyltin methacrylate were copolymerised in 300 g xylene at 80°C for three hours using 5 g AIBN catalyst and 25 g dodecyl mercaptan chain transfer agent to produce a 37.7 per cent by volume solution of a copolymer having the same monomer weight ratio as that of Example 1 but with a lower molecular weight. 164.5 g of this copolymer solution was mixed with 132 g zinc oxide, 2 g Aerosil colloidal silica, 3.5 g bentonite, 1.3 g n-butanol and 3 g xylene to produce a paint of P.V.C. 35 per cent.

The smoothing performance of paints in relatively moving seawater can be tested in the apparatus described in British Patent Specification 1,457,590 with reference to Figures 7A and 7B. A disc having a diameter of 23 cm is coated in radial stripes with the paints under test. The stripes are applied by a standardised applicator adapted to deposit a film of 100 μm dry thickness. The disc is immersed in flowing seawater and rotated at a peripheral speed of 33 knots.

During this test the paint films under test are planed away. The average thickness of the paint film in each stripe was measured before and after 2 or 4 weeks' rotation in sea-water.

The surface of the paint film in each stripe should be examined during the test to note whether it is smooth and firm. Paint films according to the invention which at least retain their initial smoothness must be distinguished from paint films which are removed over at least a portion of the stripe by flaking or localised erosion causing roughening or by separation from the disc.

The above test can be used to give an absolute rate of planing of the paint film, but the temperature, composition and flow rate of the seawater can affect the result. The test is preferably used as a comparison in which one of the stripes painted on the disc is an antifouling paint known to have the desired rate of dissolution in relatively moving seawater.

A disc was prepared having 2 stripes each of the paints of Examples 1 to 5 and 2 stripes of a commercially successful self-polishing paint X having a dissolution rate in service (for example on a tanker trading between the Middle East and Northern Europe) of 8 μm per month. The rates of dissolution of the paints under test were compared to the rate of dissolution of paint X and the results obtained are shown in Table 1.

TABLE 1

| Paint of Example No. | Ratio of dissolution rate to that of paint X |
|---|---|
| 1 | 0.63:1 |
| 2 | 0.90:1 |
| 3 | 0.34:1 |
| 4 | 0.32:1 |
| 5 | 1.95:1 |

All the paints under test dissolved smooth rather than flaking in a way which would increase the roughness of the paint. Most of the paints dissolved at about the same rate as paint X or somewhat slower indicating that they has a rate of dissolution compatible with both economic use of paint and release of sufficient biocide. The paint of Example 5 dissolved somewhat faster than would be desired in commercial practice but could be retarded by the addition of a minor amount of an organic hydrophobic retarder.

**Claims**

1. A marine paint comprising a film-forming acrylic polymer and a metalliferous pigment which is sparingly soluble in seawater, characterised in that the acrylic polymer comprises 20 to 70 per cent by weight of monomer units (A) selected from methyl acrylate and ethyl acrylate units, 10 to 45 per cent by weight of monomer units (B) of a triorganotin salt of an olefinically unsaturated carboxylic acid, and 20 to 50 per cent by weight of units (C) which are alkyl methacrylate units having 1 to 4 carbon atoms in the alkyl group or styrene units, provided that if the acrylic polymer is prepared by emulsion polymerisation it contains not more than 40 per cent by weight of monomer units (C), the monomer units (A), (B) and (C) forming at least 80 per cent by weight of the polymer and the balance of the polymer if any being units of at least one other olefinically unsaturated comonomer.

2. Marine paint according to claim 1, characterised in that the monomer units (A) are methyl acrylate units and the monomer units (C) are alkyl methacrylate units.

3. Marine paint according to claim 1 or claim 2, characterised in that the metalliferous pigment comprises cuprous oxide.

4. Marine paint according to claim 1 or claim 2, characterised in that the metalliferous pigment comprises a mixture of zinc oxide with cuprous oxide, cuprous thiocyanate or zinc dimethyl dithiocarbamate.

5. Marine paint according to any of claims 1 to 4, characterised in that the polymer includes up to 20 per cent by weight maleic anhydride units.

6. Marine paint according to any of claims 1 to 4, characterised in that the polymer includes up to 20 per cent by weight acrylamide or methacrylamide units.

7. Marine paint according to any of claims 1 to 4, characterised in that the polymer includes up to 5 percent by weight acrylic acid or methacrylic acid units.

8. Marine paint according to any of claims 1 to 7, characterised in that the monomer units (B) have the formula

$$R_3SnOOCCR'=CHR''$$

where each R independently is an alkyl radical containing 2 to 8 carbon atoms or an aryl or aralkyl radical, R' is H or $CH_3$ and R'' is H or $-COOSnR_3$.

9. Marine paint according to claim 8, characterised in that the monomer units (B) are tributyltin methacrylate units.

**Revendications**

1. Peinture marine comprenant un polymère acrylique filmogène et un pigment métallifère qui est faiblement soluble dans l'eau de mer, caractérisée en ce que le polymère acrylique comprend 20 à 70% en poids d'unités monomères (A) choisies entre les unités d'acrylate de méthyle et d'acrylate d'éthyle, 10 à 45% en poids d'unités monomères (B) d'un sel de triorganoétain d'un acide carboxylique oléfiniquement insaturé et 20 à 50% en poids d'unités (C) qui sont des unités de méthacrylate d'alcoyle comptant 1 à 4 atomes de carbone dans le radical alcoyle ou des unités de styrène, étant entendu que si le polymère acrylique est préparé par polymérisation en émulsion, il ne contient pas plus de 40% en poids d'unités monomères (C), les unités monomères (A) et (B) et (C) formant au moins 80% du poids du copolymère et le

reste éventuel du polymère étant formé d'unités d'au moins un autre comonomère oléfiniquement insaturé.

2. Peinture marine suivant la revendication 1, caractérisé en ce que les unités monomères (A) sont des unités d'acrylate de méthyle et les unités monomères (C) sont des unités de méthacrylate d'alcoyle.

3. Peinture marine suivant la revendication 1 ou 2, caractérisée en ce que le pigment métallifère comprend de l'oxyde cuivreux.

4. Peinture marine suivant la revendication 1 ou 2, caractérisée en ce que le pigment métalifère comprend un mélange d'oxyde de zinc avec de l'oxyde cuivreus, du thiocyanate cuivreux ou du diméthyldithiocarbamate de zinc.

5. Peinture marine suivant l'une quelconque des revendications 1 à 4, caractérisée en ce que le polymère comprend jusqu'à 20% en poids d'unités d'anhydride maléique.

6. Peinture suivant l'une quelconque des revendications 1 à 4, caractérisé en ce que le polymère comprend jusqu'à 20% en poids d'unités d'acrylamide ou de méthacrylamide.

7. Peinture marine suivant l'une quelconque des revendications 1 à 4, caractérisée en ce que le polymère comprend jusqu'à 5% en poids d'unités d'acide acrylique ou d'acide méthacrylique.

8. Peinture marine suivant l'une quelconque des revendications 1 à 7, caractérisé en ce que les unités monomères (B) sont de formule

$$R_3SnOOCCR'=CHR''$$

où chaque R représente indépendamment un radical alcoyle comptant 2 à 8 atomes de carbone ou un radical aryle ou aralcoyle, R' représente H ou $CH_3$ et R'' représente H ou $—COOSnR_3$.

9. Peinture marine suivant la revendication 8, caractérisée en ce que les unités monomères (B) sont des unités de méthacrylate de tributylétain.

**Patentansprüche**

1. Unterwasseranstrich bestehend aus einem filmbildenden Acrylpolymerisat und einem metallhaltigen, in Meerwasser schwerlöslichen Pigment, dadurch gekennzeichnet, dass das Acrylpolymerisat 20 bis 70 Gewichtsprozent unter Methylacrylat- und Aethylacrylateinheiten ausgewählte Monomereinheiten (A), 20 bis 45 Gewichtsprozent Monomereinheiten (B) aus einem Triorganozinnsalz einer olefinish ungesättigten Carbonsäure und 20 bis 50 Gewichtsprozent Einheiten (C), die Alkylmethacrylateinheiten mit 1 bis 4 Kohlenstoffatomen in der Alkylgruppe oder Styroleinheiten darstellen, enthält, unter der Voraussetzung dass das Acrylpolymerisat, wenn es durch Emulsionspolymerisation hergestellt wird, nicht mehr als 40 Gewichtsprozent Monomereinheiten (C) enthält, wobei die Monomereinheiten (A), (B) und (C) mindestens 80 Gewichtsprozent des Polymerisats ausmachen und ein gegebenenfalls vorhandener Rest des Polymerisats aus Einheiten mindestens eines weiteren olefinisch ungesättigten Comonomeren besteht.

2. Unterwasseranstrich nach Anspruch 1, dadurch gekennzeichnet, dass als Monomereinheiten (A) Methylacrylateinheiten und als Monomereinheiten (C) Alkylmethacrylateinheiten vorliegen.

3. Unterwasseranstrich nach Anspruch 1 oder 2, dadurch gekennzeichnet, dass das metallhaltige Pigment Kupfer(I)-oxyd enthält.

4. Unterwasseranstrich nach Anspruch 1 oder 2, dadurch gekennzeichnet, dass das metallhaltige Pigment ein Gemisch aus Zinkoxyd mit Kupfer(I)-oxyd, Kupfer(I)-thiocyanat oder Zink-dimethyldithiocarbamat enthält.

5. Unterwasseranstrich nach einem der Ansprüche 1 bis 4, dadurch gekennzeichnet, dass das Polymerisat ferner bis zu 20 Gewichtsprozent Maleinsäureanhydrideinheiten enthält.

6. Unterwasseranstrich nach einem der Ansprüche 1 bis 4, dadurch gekennzeichnet, dass das Polymerisat ferner bis zu 20 Gewichtsprozent Acrylamid- oder Methacrylamideinheiten enthält.

7. Unterwasseranstrich nach einem der Ansprüche 1 bis 4, dadurch gekennzeichnet, dass das Polymerisat ferner bis zu 5 Gewichtsprozent Acrylsäure- oder Methacrylsäureeinheiten enthält.

8. Unterwasseranstrich nach einem der Ansprüche 1 bis 7, dadurch gekennzeichnet, dass die Monomereinheiten (B) der Formel

$$R_3SnOOCCR'=CHR''$$

entsprechen, worin die R unabhängig voneinander jeweils für einen Alkylrest mit 2 bis 8 Kohlenstoffatomen oder einen Aryl- oder Aralkylrest, R' für H oder $CH_3$ und R'' für H oder $—COOSnR_3$ stehen.

9. Unterwasseranstrich nach Anspruch 8, dadurch gekennzeichnet, dass als Monomereinheiten (B) Tributylzinnmethacrylateinheiten vorliegen.